# EUROPEAN PATENT SPECIFICATION

(11) **EP 1 059 849 B1**
(45) Date of publication and mention of the grant of the patent: **10.12.2003**
(21) Application number: 99910253.6
(22) Date of filing: 23.02.1999
(51) Int. Cl.: A23J 3/18, A23L 1/238

(54) **PELLETISATION PROCESS**
VERFAHREN ZUM PELLETIEREN
PROCEDE DE GRANULATION

(30) Priority: 05.03.1998 SG 9800488
(43) Date of publication of application: 20.12.2000
(73) Proprietor: Société des Produits Nestlé S.A., 1800 Vevey (CH)
(72) Inventor: LIM, Bee, Gim, Singapore 649426 (SG); HO DAC, Thang, CH-1052 Le Mont sur Lausanne (CH)
(74) Representative: Pate, Frederick George
(86) International application number: PCT/EP99/01133
(87) International publication number: WO 99/044437

(56) References cited:
- EP-A- 0 640 294
- EP-A- 0 711 510
- EP-A- 0 824 873
- DATABASE WPI Section Ch, Week 8727 Derwent Publications Ltd., London, GB; Class D16, AN 87-189049 XP002103090 & JP 62 118880 A (NISSHIN FLOUR MILLING CO), 30 May 1987

## Description

### FIELD OF THE INVENTION

The present invention relates to a pelletisation process and more particularly to a process for the pelletisation of a dried gluten material which may be used as a fermenting material for the production of fermented products such as soy sauce and seasonings, etc.

### BACKGROUND OF THE INVENTION

EP-A-0711510 claims a process for the production of a fermenting material which comprises using 5-100% by weight of a dried gluten product and 95-0% by weight of wheat as a raw material, adding steam to the material so as to adjust a moisture content upon granulating within a range of 12-18%, and granulating followed by steaming. The steaming is said to denature the wheat gluten. The adjustment of moisture content to the required range is said to facilitate the granulation, which upon steaming, achieves the satisfactory denaturation of protein. The dried gluten product is said to include dried wheat gluten product, dried corn gluten product and the like. The fermenting material may be used in the manufacture of fermented products such as soy sauce, miso, seasoning and the like.

However, when steam is added directly to gluten, in the case of saturated steam and vital wheat gluten, there are problems not only with the formation of undesirable hard lumps which have to be sieved away causing losses, but also it is very difficult to achieve a moisture content of from 12-18%, especially for a larger scale of production. Vitality causes elasticity of the wheat gluten dough when water is added.

WPI AN 87-189049 discloses a method of preparing a brewing material for kaji, by heating flour to denature its protein, hydrating to a moisture content of 30-50%, granulating and steaming.

### SUMMARY OF THE INVENTION

We have found that these problems can be solved by devitalising the wheat gluten before the pelletisation. Devitalisation is part of denaturation and can be achieved by heat treatment. Upon devitalisation, water can be added in an amount of from 19 to 60%, depending on the degree of devitalisation, to form a dough and to facilitate pelletisation. Additional water can be introduced to the pellets, if necessary, to adjust the moisture content to from 35 to 60% based on the. weight of the pellets, so that they are suitable for koji fermentation, before sterilisation and further denaturation by steam. No lumps are produced and no losses occur. The devitalisation process is necessary only when the gluten is vital, for example in the case of vital wheat gluten.

Accordingly, the present invention provides a process for the production of a fermenting material which comprises forming a dough by adding water to a dried gluten in an amount of from 19 to 60% by weight based on the weight of the dough, pelletising the dough and adding water to adjust the moisture content to from 35 to 60% by weight based on the weight of the pellets before sterilising the pellets by steam treatment.

### DETAILED DESCRIPTION OF THE INVENTION

In this description, "pelletising" is used as synonymous with "granulating".

The dried gluten may be wheat gluten, corn gluten or rice gluten and one or more glutens may be used to produce the pellet. When the dried gluten used is wheat gluten, it is advantageous to devitalise the wheat gluten before adding the water although devitalisation is not necessary. The devitalisation may be carried out by heating at a temperature above 60°C, e.g. by means of hot air or contact with hot surface, in a drier, an oven or using a steam jacketed vessel. The duration of the devitalisation may be from 5 seconds to 3 hours and depends on the temperature used, generally longer periods of time being required at lower temperatures. For example, the devitalisation may be carried out at a temperature from 60° to 200°C over a period of from 3 hours to 5 seconds, preferably from 100° to 120°C over a period of from 30 to 5 minutes.

Before adding the water to the dried gluten, it is advantageous to add wheat such as wheat flour or wheat bran as the carbohydrate source to the dried gluten. The amount of wheat added may be up to to 90%, preferably from 5 to 50% and especially from 10 to 30% by weight based on the weight of the dried raw material.

The amount of water added to the dried gluten is preferably from 30 to 45% by weight based on the weight of the dough. The amount of water added depends on the vitality of the gluten as well as the composition of the raw materials.

The dough may be pelletised by conventional means such as a screw press, a meat mincer or a pellet mill. The pellets may have either a cylindrical shape with an average diameter of from 1 to 10mm, preferably from 2 to 8mm and especially from 4 to 6mm or they may have a spherical shape with diameter of from 1 to 10mm, preferably from 2 to 8mm and especially from 4 to 6mm.

The water added to the pellets before sterilisation by steaming preferably increases the moisture content to from 40 to 50% by weight based on the weight of the pellets.

After cooling, the pellets may then be made into koji by mixing with carbohydrates, inoculating with Aspergilli and fermenting the koji substrate for about two days. The koji may then be converted into a seasoning by conventional methods or by a method as described in EP 0640294 or our co-pending patent applications EP-A-96114850.9 (EP 0829205) and EP-A- 96202309.9 (EP 0824873), the entirety of which are hereby incorporated by reference. The use of the pellets of the present invention in the koji fermentation gives a good hydrolysis yield due to the ease of disintegration during hydrolysis.

Advantageously, the process may be carried out continuously, e.g. using a noodle line concept but with a lower precision on the dough thickness and noodle diameter. The continuous process includes mixing the ingredients (dried devitalised gluten, wheat flour, wheat bran), pelletisation, addition of water, steaming, cooling and inoculation of spore suspension. The substrate is then loaded onto the koji machine for fermentation and subsequent hydrolysis.

### EXAMPLES

The following Examples further illustrate the invention.

### Example 1

35kg of vital wheat gluten was devitalised by heating at 100°C in a ribbon blender with a steam jacket for 30 minutes. The thus devitalised wheat gluten was mixed with 2.5 kg of wheat bran and 12.5 kg of wheat flour. Water was added to the mixture to obtain a moisture content of 33%w/w. The dough formed was then fed into a mincer to produce cylindrical pellets each having a diameter of 5mm. Additional water was introduced to the pellets such that the moisture content of the pellets was 47%w/w. The pellets were then steamed at 100°C for 10 minutes and afterwards cooled to below 40°C. The cooled pellets were mixed with a liquid suspension of 25g of Aspergillus oryzae spores inoculum. Koji fermentation was carried out for 42 hours at 27 - 33°C. The matured koji was hydrolysed by adding water to obtain a hydrolysate with a total solid content of 20.2%m/m. The hydrolysis was carried out at 4°C for 2 weeks before 2 weeks of moromi fermentation where salt was added at a level of 12%m/m. The moromi was pressed and the clear sauce was heat treated at 90°C for 20 minutes. The product thus prepared had a light colour, good taste and excellent flavour.

### Example 2

Water was added directly to a mixture of 35kg of rice gluten, 2.5 kg of wheat bran and 12.5 kg of wheat flour to obtain a moisture content of 45%w/w. The dough formed was then fed into a mincer to produce cylindrical pellets each having a diameter of 5mm. A similar procedure for steaming, koji making and sauce preparation was followed as in Example 1.

The product thus prepared had a light colour, good taste and excellent flavour.

### Example 3

A similar procedure was carried out as in Example 2 except that corn gluten powder was used instead of rice gluten powder and the moisture content of the dough before pelletisation was 35%.w/w. Additional water was introduced to the pellets before steaming such that the moisture content of the pellets was 47%w/w.

The product thus prepared had a light colour, good taste and excellent flavour.

### Example 4

A similar procedure was carried out as in Example 1 except that 35kg of devitalised wheat gluten was mixed with 2kg of wheat bran and 4 kg of wheat flour and water was added to give a moisture content of 40%w/w before pelletisation.

### Example 5

A similar procedure was carried out as in Example 1 except that 35kg of devitalised wheat gluten was mixed with 5 kg of vital wheat gluten, 2.4kg of wheat bran and 4.7 kg of wheat flour and water was added to give a moisture content of 33%w/w before pelletisation.

### Example 6

A similar procedure was carried out as in Example 1 except that the devitalisation of wheat gluten was carried out by adding directly superheated steam at 1 bar and 150°C to the wheat gluten before mixing with the carbohydrates and forming the pellets.

### Example 7

A similar procedure was carried out as in Example 1 except that the devitalisation of wheat gluten was carried out in a fluidised bed dryer with inlet air temperature set at 110°C.

### Example 8

A similar procedure was carried out as in Example 1 except that the diameter of the pellets were 3 mm.

### Example 9

A similar procedure was carried out as in Example 1 except that the pelletisation was carried out using a screw press.

### Example 10

A similar procedure was carried out as in Example 1 except that the pelletiser used produced spherical granulates with diameter of 3-8mm.

### Example 11

A similar procedure was carried out as in Example 1 except that 25 kg of corn gluten pellets prepared as described in Example 3 were fermented together with the wheat gluten pellets.

### Example 12

A similar procedure was carried out as in Example 3 except that 35 kg of wheat gluten devitalised as described in Example 1 was mixed together with 35 kg of rice gluten, 5 kg of wheat bran and 25 kg of wheat flour before the pelletisation.

### Example 13

A similar procedure was carried out as in Example 11 except that 40 kg of steamed defatted soya bean mill was used instead of corn gluten.

### Example 14

A similar procedure was carried out as in Example 1 except that wheat flour and wheat bran were mixed with vital wheat gluten before devitalisation.

### Example 15

A similar procedure was carried out as in Example 1 except that an inoculum of lactic acid bacteria at 7x10⁵ cfu/g was added to the steamed pellets before koji fermentation and the hydrolysis was carried out at 35°C for 2 days. Pressing was carried out after the hydrolysis and with salt added to a level of 12%m/m.

### Example 16

A similar procedure was carried out as in Example 1 except that the devitalisation step is omitted and water is added to the mixture of wheat gluten, wheat bran and wheat flour to obtain a moisture content of 20%w/w.

## Claims

1. A process for the production of a fermenting material which comprises forming a dough by adding water to a dried gluten in an amount of from 19 to 60% by weight based on the weight of the dough, pelletising the dough and, if necessary, adding water to adjust the moisture content to from 35 to 60% by weight based on the weight of the pellets before sterilising the pellets by steam treatment.

2. A process according to claim 1 wherein one or more glutens is used to produce the pellet.

3. A process according to claim 1 wherein the dried gluten is wheat gluten, corn gluten or rice gluten.

4. A process according to claim 1 wherein when the dried gluten used is vital wheat gluten, the wheat gluten is devitalised before adding the water.

5. A process according to claim 4 wherein the devitalisation is carried out at a temperature from 60° to 200°C over a period of from 3 hours to 5 seconds.

6. A process according to claim 4 wherein the devitalisation is carried out by means of superheated steam, hot air, in a drier, an oven or a steam jacketed vessel.

7. A process according to claim 1 wherein wheat is added to the dried gluten before adding the water to the dried gluten and pelletising.

8. A process according to claim 4 wherein wheat is added to the dried gluten before devitalisation of wheat gluten.

9. A process according to claim 7 or claim 8 wherein the wheat is wheat flour or wheat bran.

10. A process according to claim 1 wherein the dough is pelletised by a screw press, a meat mincer or a pellet mill.

11. A process according to claim 1 wherein the pellets have a cylindrical shape or spherical shape and with an average diameter of from 1 to 10mm.

12. A process according to any of the preceding claims, further comprising mixing the pellets with carbohydrates, inoculating with Aspergilli and fermenting for a period of time to make fermented koji so that enzymes are produced which are capable of hydrolysing protein and carbohydrates.

## Patentansprüche

1. Verfahren für die Herstellung eines Fermentiermaterials, das das Bilden eines Teigs durch Zugeben von Wasser zu einem getrockneten Gluten in einer Menge von 19 bis 60 Gew.% auf der Basis des Gewichts des Teigs, das Pelletieren des Teigs und, wenn erforderlich, das Zugeben von Wasser, um den Feuchtigkeitsgehalt zwischen 35 und 60 Gew.% auf der Basis des Gewichts der Pellets vor der Sterilisierung der Pellets durch Dampfbehandlung einzustellen, umfaßt.

2. Verfahren nach Anspruch 1, bei dem ein oder mehrere Glutene eingesetzt werden, um das Pellet herzustellen.

3. Verfahren nach Anspruch 1, bei dem das getrocknete Gluten Weizengluten, Maisgluten oder Reisgluten ist.

4. Verfahren nach Anspruch 1, bei dem, wenn das eingesetzte getrocknete Gluten Vitalweizengluten ist, das Weizengluten devitalisiert wird, bevor das Wasser zugefügt wird.

5. Verfahren nach Anspruch 4, bei dem das Devitalisieren bei einer Temperatur zwischen 60° und 200°C für eine Zeitdauer von 3 Stunden bis 5 Sekunden ausgeführt wird.

6. Verfahren nach Anspruch 4, bei dem das Devitalisieren mittels überhitztem Dampf, heißer Luft, in einem Trockner, in einem Ofen oder in einem Dampfmantelkessel ausgeführt wird.

7. Verfahren nach Anspruch 1, bei dem dem getrockneten Gluten Weizen vor der Zugabe des Wassers zu dem getrockneten Gluten und dem Pelletieren zugegeben wird.

8. Verfahren nach Anspruch 4, bei dem Weizen dem getrockneten Gluten vor dem Devitalisieren des Weizenglutens zugegeben wird.

9. Verfahren nach Anspruch 7 oder Anspruch 8, bei dem der Weizen Weizenmehl oder Weizenkleie ist.

10. Verfahren nach Anspruch 1, bei dem der Teig durch eine Schraubenpresse, einen Fleischwolf oder eine Pelletiermühle pelletiert wird.

11. Verfahren nach Anspruch 1, bei dem die Pellets eine zylindrische Form oder sphärische Form mit einem durchschnittlichen Durchmesser zwischen 1 und 10 mm aufweisen.

12. Verfahren nach einem der vorhergehenden Ansprüche, des weiteren mit dem Mischen der Pellets mit Kohlehydraten, dem Beimpfen mit Aspergilli und dem Fermentieren für eine Zeitdauer, um fermentiertes Koji herzustellen, so daß Enzyme produziert werden, die fähig sind, Protein und Kohlenhydrate zu hydrolysieren.

## Revendications

1. Procédé de production d'une matière de fermentation qui comprend les étapes consistant à former une pâte en ajoutant de l'eau à un gluten séché à raison de 19 à 60 % en poids rapportés au poids de la pâte, à granuler la pâte et, si nécessaire, à ajouter de l'eau pour ajuster la teneur en eau à une valeur de 35 à 60 % en poids rapportés au poids des granulés avant de stériliser les granulés par un traitement à la vapeur.

2. Procédé selon la revendication 1, dans lequel on utilise un ou plusieurs glutens pour produire le granulé.

3. Procédé selon la revendication 1, dans lequel le gluten séché est du gluten de froment, du gluten de mais ou du gluten de riz.

4. Procédé selon la revendication 1, dans lequel, lorsque le gluten séché utilisé est du gluten de froment vital, le gluten de froment est dévitalisé avant d'ajouter l'eau.

5. Procédé selon la revendication 4, dans lequel la dévitalisation est effectuée à une température de 60° à 200°C sur une durée comprise entre 3 heures et 5 secondes.

6. Procédé selon la revendication 4, dans lequel la dévitalisation est effectuée au moyen de vapeur d'eau surchauffée, d'air chaud, dans un séchoir, un four ou un récipient chauffé à la vapeur.

7. Procédé selon la revendication 1, dans lequel le froment est ajouté au gluten séché avant d'ajouter l'eau au gluten séché et avant la granulation.

8. Procédé selon la revendication 4, dans lequel le froment est ajouté au gluten séché avant la dévitalisation du gluten de froment.

9. Procédé selon la revendication 7 ou la revendication 8, dans lequel le froment est de la farine de froment ou du son de blé.

10. Procédé selon la revendication 1, dans lequel la pâte est granulée à l'aide d'une presse à vis, d'un hachoir à viande ou d'une machine à granuler.

11. Procédé selon la revendication 1, dans lequel les granulés ont une forme cylindrique ou une forme sphérique et un diamètre moyen de 1 à 10 mm.

12. Procédé selon l'une quelconque des revendications précédentes, comprenant en outre les étapes consistant à mélanger les granulés avec des glucides, à leur inoculer des Aspergillus et à les laisser fermenter pendant un certain temps pour donner du koji fermenté de façon à produire des enzymes capables d'hydrolyser les protéines et les glucides.
